# EUROPEAN PATENT APPLICATION

(11) **EP 4 559 531 A1**
(43) Date of publication of application: **28.05.2025**
(21) Application number: 23211551.9
(22) Date of filing: 22.11.2023
(51) Int. Cl.: A62B 9/02, A62B 7/02

(54) **BREATHING APPARATUS PRESSURISATION FAILSAFE**

(71) Applicant: Dräger Safety AG & Co. KGaA, 23560 Lübeck (DE)
(72) Inventor: FARNABY, James Andrew, Newcastle upon Tyne, NE3 5QL (GB); LAGEAT, Emilie, Morpeth, NE6 5BB (GB)
(74) Representative: Haseltine Lake Kempner LLP

(57) **Abstract**

There is disclosed a first stage pressure reducer for a breathing apparatus comprising: a body comprising an internal cavity and an end cap for closing an opening of the internal cavity; and a piston slidably arranged within the internal cavity, the piston comprising a piston head, the piston head comprising a bore, the bore being configured to receive a plunger, the plunger and piston being slidably moveable relative to each other, and the plunger having a sealing point configured to selectively seal against a sealing seat in the bore of the piston head when the plunger is received a sufficient distance into the bore, wherein, when a proximal end of the plunger contacts the end cap, an effective length of the plunger is greater than an effective length of the bore, such that the sealing point and the sealing seat are in sealing contact when the piston is maximally displaced towards the end cap. Also disclosed is a self-contained breathing apparatus comprising a first stage pressure reducer.

## Description

### Background

Self-contained breathing apparatus (SCBA) products are typically used by fire fighters to provide safe breathing gas in environments with contaminated atmospheres. Typical SCBA products have a high-pressure system which includes a breathing gas tank at a nominal pressure of around 300 bar. The high-pressure system is connected to a medium-pressure system via a first stage pressure reduction device (first stage pressure reducer). Such devices output breathing gas from the high-pressure system into the medium pressure system at a lower pressure of around 7 bar. This medium pressure breathing gas may then pass through a second stage pressure reduction device to further reduce the pressure to a level suitable for a user to breathe.

First stage pressure reducers are designed to be 'normally open', meaning breathing gas can flow freely through the system. This is beneficial as it ensure any failure of components inside such a reducer causes the reducer to fail 'safely', thereby ensuring breathing gas is always supplied to the user. However, this can also lead to excess flow into and thus over pressurisation of the medium pressure system.

Therefore, there exists a need for a new type of first stage pressure reducer which minimises the likelihood of downstream over pressurisation, while maintaining the "normally open" safety standards to protect the user.

### Summary

In a first aspect, there is disclosed a first stage pressure reducer for a breathing apparatus comprising: a body comprising an internal cavity and an end cap for closing an opening of the internal cavity; and a piston slidably arranged within the internal cavity, the piston comprising a piston head, the piston head comprising a bore, the bore being configured to receive a plunger, the plunger and piston being slidably moveable relative to each other, and the plunger having a sealing point configured to selectively seal against a sealing seat in the bore of the piston head when the plunger is received a sufficient distance into the bore, wherein, when a proximal end of the plunger contacts the end cap, an effective length of the plunger is greater than an effective length of the bore, such that the sealing point and the sealing seat are in sealing contact when the piston is maximally displaced towards the end cap.

The effective length of the plunger should be understood to mean a minimum first distance between the sealing point of the plunger and the end cap. The effective length of the bore should be understood to mean a minimum second distance between the sealing seat and the end cap when the piston is maximally displaced towards the end cap.

The piston is slidably arranged within the internal cavity such that the piston head opposes the end cap, and the piston slides along an axis perpendicular to the end cap.

Maximally displaced towards the end cap should be understood to mean a position wherein the piston is at a point in its stroke where it is closest to the end cap. In other words, the distance between the piston and the end cap is minimized. Such a position may correspond to the piston and the end cap being in contact.

The minimum first and second distances are measured as straight lines, perpendicularly extending between parallel planes defined at the start and end points of each line. Where the start and/or end points are on faces, the planes are defined at the surface of such faces.

Sufficient distance should be understood to mean a distance that is great enough to cause the sealing point to seal against the sealing seat when the plunger is received into the bore.

The end cap may comprise a protruding seat extending out from the end cap, the proximal end of the plunger being configured to contact the protruding seat such that part of the effective length of the plunger is formed by the protruding seat.

The end cap may comprise an adjustment element configured to vary the effective length of the plunger.

The protruding seat may be a raised portion of the end cap extending out from the end cap face. The end cap face may be a main face of the end cap, the main face of the end cap being the primary surface of the end cap in contact with the internal cavity of the body. The protruding seat may increase a distance between the end cap and the sealing point of the plunger, thereby increasing the effective length of the plunger. In other words, the protruding seat may define a minimum distance between the end cap and the proximal end of the plunger, thereby defining the effective length of the plunger (as the plunger is fixed in length).

The adjustment element may be manually actuated or may be driven electrically or otherwise. The adjustment element may be accessible from the outside of the body, thereby enabling the adjustment element to be set from outside of the body by, for example, a manufacturer on a production line or a maintenance worker. The adjustment element may require the use of an additional tool such as a hex key to be adjusted.

The adjustment element may be a setting screw disposed within a threaded through-hole of the end cap, a distal end of the setting screw may be configured to contact the proximal end of the plunger, and rotation of the setting screw may vary the effective length of the plunger.

The protruding seat may be a raised portion of the end cap extending out from the end cap face and the distal end of the setting screw may contact the proximal end of the plunger when the setting screw is adjusted so that the distal end extends past the protruding seat.

The setting screw may be adjustable between a first position corresponding to the distal end not extending past the protruding seat and a second position corresponding to the distal end extending past the protruding seat and may be adjustable to any position therebetween.

The protruding seat may be an annular protrusion which encircles the through-hole of the setting screw.

The annular protrusion may be disposed either at the edge of the through-hole so as to extend the length of the through-hole through the annular protrusion, or may have a larger diameter than the through-hole, thereby being offset from the edge of the through-hole.

A length of the plunger between the sealing point and the proximal end may be greater than the effective length of the bore.

In other words, the proximal end of the plunger may extend out from the bore when the sealing point of the plunger is sealing against the sealing seat of the piston.

The effective length of the plunger may be at least 0.1 mm greater than the effective length of the bore, and optionally at least 0.3 mm greater than the effective length of the bore. The effective length of the plunger may also be at least 0.5 mm greater than the effective length of the bore, and optionally at least 0.7 mm greater than the effective length of the bore.

The sealing point of the plunger may be formed of a polymer, optionally nylon. The sealing point of the plunger may be part of a distal sealing end of the plunger, the distal sealing end may be replaceable. The distal sealing end may have a shape complementary to a shape of the distal end of the plunger so as to permit the distal sealing end to be removably attachable to the distal end.

The sealing seat may be a convex point, optionally an acutely convex point.

The end cap may be removably installable into the opening of the body, optionally the end cap may be retained in the body by a circlip. The end cap may comprise a threaded portion and the opening of the body may comprise a corresponding threaded portion, thereby permitting the end cap to be threadedly installed into the opening of the body.

The internal cavity of the body may have a higher-pressure region configured to receive higher-pressure gas from a gas source, a lower-pressure region configured to receive lower-pressure gas from the higher-pressure region, and a piston bore, the piston bore connecting the higher-pressure region and the lower-pressure region;

The piston may be configured to move reciprocally inside the piston bore between an open position and a closed position, the open position corresponding to a state whereby gas is permitted to flow from the higher-pressure region to the lower-pressure region via an internal bore of the piston, and the closed position corresponding to a state whereby gas is inhibited from flowing from the higher-pressure region to the lower-pressure region via the internal bore; the piston may be configured to move from the open position to the closed position when a pressure differential between the higher-pressure region and the lower-pressure region falls below a lower threshold; and the piston may be configured to move from the closed position to the open position when the pressure differential between the higher-pressure region and the lower-pressure region rises above an upper threshold.

In another aspect, there is provided a self-contained breathing apparatus comprising a first stage pressure reducer as described above.

### Brief Description of the Drawings

Arrangements of the invention will now be described, by way of example, and with reference to the accompanying drawings, in which:
Figure 1 shows cross sectional view of a design of first stage pressure reducer know in the art;
Figures 2A-2C each show an enlarged view of the first stage pressure reducer shown in Figure 1;
Figure 3A shows a first stage pressure reducer according to the present invention with a piston in an open position;
Figure 3B shows a first stage pressure reducer according to the present invention with a piston in a closed position; and
Figure 4 shows a further embodiment of a first stage pressure reducer according to the present invention with a piston in a closed position.

### Detailed Description of the Drawings

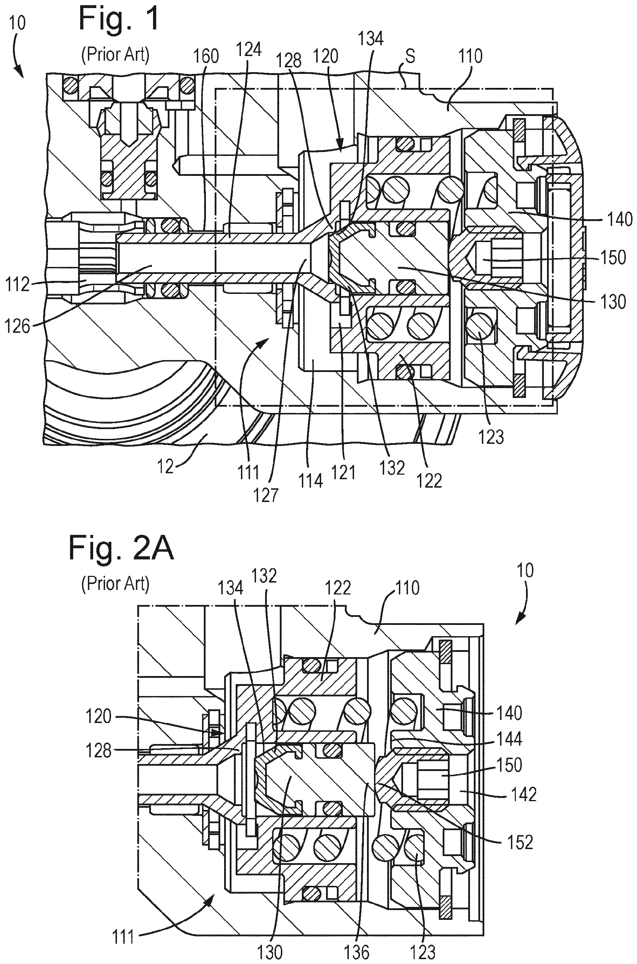

With reference to **Figure 1****,** an example of a known first stage pressure reducer 10 is shown. The first stage pressure reducer 10 comprises a body 110 which defines a cavity 111. The cavity 111 has a higher-pressure region 112, a lower-pressure region 114 and a piston bore 160. The higher- and lower-pressure regions 112, 114 are fluidly connected by the piston bore 160. The body 110 connects to a pressurised breathing gas supply such as a pressurised breathing gas tank 12 via a connector (not shown) which enables the higher-pressure region 112 to receive higher-pressure breathing gas from the tank 12. The lower-pressure region 114 is configured to receive lower-pressure breathing gas from the higher-pressure region 112 via the piston bore 160. The lower-pressure breathing gas is generally at a lower pressure than the higher-pressure breathing gas but at a higher pressure than user-deliverable breathing gas. This breathing gas may be referred to as either intermediate-pressure breathing gas or lower-pressure breathing gas.

Typically, the breathing gas inside the tank 12 and therefore the higher-pressure region is pressurised to between 10 and 40 MPa, often around 30 MPa. Before the lower-pressure region 114 receives this breathing gas, the pressure of the breathing gas must be reduced.

A piston 120, comprising a head 122 and a tail 124 is disposed inside the body 110. The piston head 122 is located primarily inside the lower-pressure region 114, while the piston tail 124 is located primarily inside the higher-pressure region 112 and the piston bore 160.

The piston 120 is used to reduce the pressure of the higher-pressure breathing gas as the breathing gas enters the lower-pressure region 114, thereby providing the lower-pressure region 114 with lower-pressure (intermediate-pressure) breathing gas. Starting from an "open" position of the piston 120, higher-pressure breathing gas flows from the higher-pressure region 112 through an internal bore 126 of the piston tail 124 and into the piston head 122, where the gas enters the lower-pressure region 114 via an outlet 121 in the piston head 122. The introduction of this higher-pressure gas causes the pressure in the lower-pressure region 114 to increase and begin to push on the piston head 122, causing the piston 120 to move in a way that expands the volume of the lower-pressure region 114. From the perspective of Figure 1, the piston 120 moves in a direction away from the higher-pressure region 112. Resultingly, the spring 123 is compressed until a sealing point 134 on the distal sealing end 132 of a plunger 130 seals against a corresponding sealing seat 128 at a neck 127 of the internal bore 126, thereby blocking the neck 127 at an interface between the internal bore 126 and the head 122.

Once the neck 127 is blocked, the higher-pressure breathing gas in the higher-pressure region 112 is prevented from flowing through the internal bore 126, into the lower-pressure region 114. This state corresponds to a "closed" position of the piston 120. As the user consumes the breathing gas in the lower-pressure region 114 (via a second stage pressure reducer and/or a demand regulator, not shown) the pressure inside the lower-pressure region 114 drops, causing the force acting on the piston head 122 to reduce. The spring 123 therefore returns the piston 120 back to the "open" position, thus resetting the position of the piston 120.

The movement between the open and closed positions repeats according to user breathing gas demand, causing the piston 120 to move reciprocally through the piston bore 160, for as long as there is sufficient breathing gas in the tank 12. In particular, the tail 124 moves reciprocally through the piston bore 160 while the head 122 moves reciprocally inside the lower-pressure region 114. The discrete transfer of higher-pressure gas from the higher-pressure region 112 to the lower-pressure region 114, where the higher-pressure gas is able to expand (and thereby decrease in pressure), is what results in the controlled pressure reduction of the breathing gas.

Figures 2A - 2C show an enlarged view (marked as "S" in Figure 1) of the piston head 122 and the plunger 130. Turning to **Figure 2A****,** an end cap 140 is provided in the body 110, opposite the piston head 122, closing an opening of the body 110. A setting screw 150 is provided in a threaded through-hole 142 inside the end cap 140. The setting screw 150 can be rotated to adjust the distance a distal end 152 of the setting screw 150 extends from a face 144 of the end cap 140. The distal end 152 contacts the plunger 130 at a proximal end 136. Therefore, the extension distance of the distal end 152 from the end cap face 144 determines a minimum distance between the proximal end 136 of the plunger 130 and the end cap face 144, which is an internally-facing face of the end cap. It follows that this extension distance also determines the minimum distance between the sealing point 134 of the distal sealing end 132 of the plunger 130 and the end cap face 144 (as the plunger 130 is of substantially constant length).

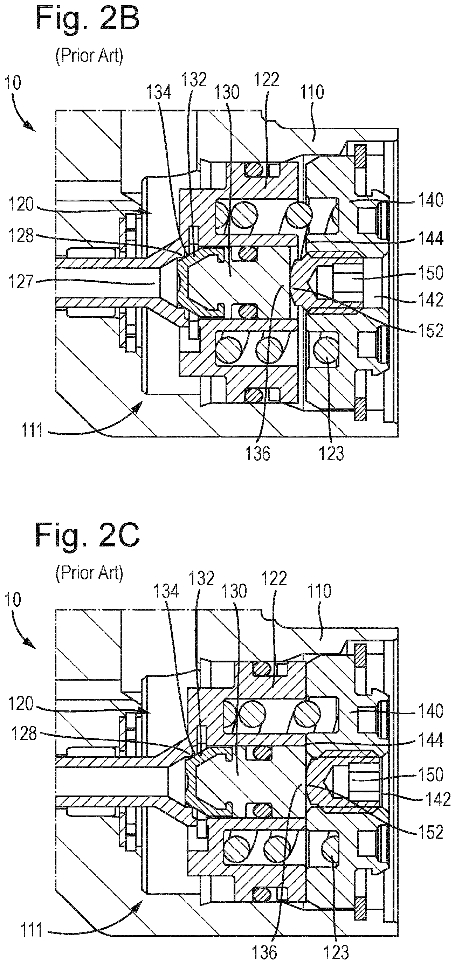

In routine operation, varying the position of the setting screw 150, and thereby varying the extension distance of the distal end 152, causes the point at which the piston 120 will move from the closed position to the open position (or vice versa) to change. In other words, varying the extension distance causes a change in a displacement of the spring 123 required to seal or, as the case may be, unseal the sealing seat 128 from the sealing point 134. By changing this displacement, the pressure difference between the higher- and lower- pressure regions 112, 114 required to compress the spring 123 also changes. **Figure 2B** shows the plunger 130 in a closed position (of routine operation), where the sealing point 134 is sealing against the sealing seat 128, thereby preventing gas flow through the neck 127 into the lower-pressure region 114. The distal end 152 of the setting screw 150 is extending out from the end cap face 144.

However, as shown in **Figure 2C****,** in situations where the setting screw 150 has been retracted entirely so no part of the distal end 152 extends past the end cap face 144, the sealing point 134 is no longer able to seal against the sealing seat 128 irrespective of how far the piston 120 moves towards the end cap 140. This position of the setting screw 150 could arise from a component failure (e.g., failure of the through-hole 142 threads), or from user error if the setting screw 150 is manually withdrawn too far or not replaced after maintenance. It is also possible that the setting screw 150 may self-loosen due to vibrations during use of the reducer 10.

In this state, the piston 120 moves from the open position towards the closed position - away from the higher-pressure region 112 and towards the end cap 140 as it normally would. However, due to the position of the setting screw 150, the piston head 122 contacts the end cap face 144 (as shown) before the sealing point 134 and sealing seat 128 have formed a seal. Breathing gas is thus uninhibited from flowing freely from the higher-pressure region 112, between the sealing point 134 and sealing seat 128, and into the lower-pressure region 114. In this failure state the breathing gas stored in the tank 12 will be rapidly lost through the reducer 10, potentially causing damage to downstream components and/or harm to the user. Damage may occur through over pressurisation of the downstream components as a result of the higher-pressure gas contacting the downstream components, which are not designed to operate at such pressures.

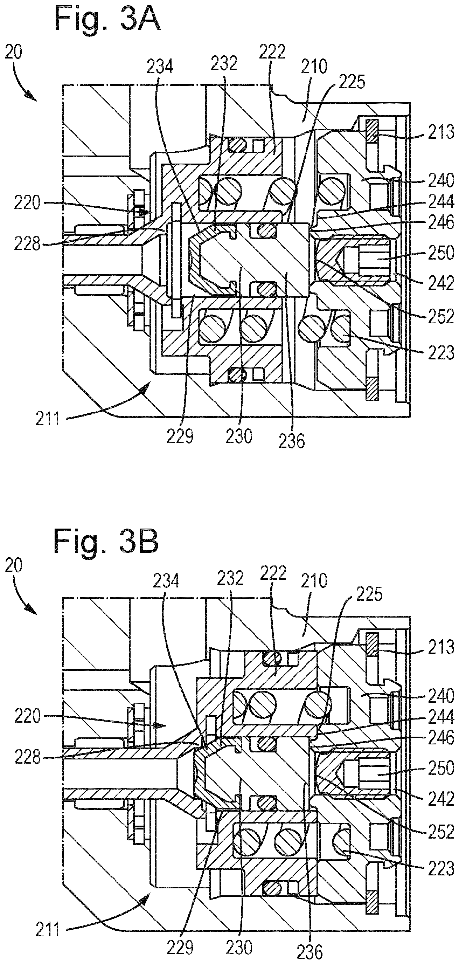

Figures 3A and 3B, show an embodiment 20 of the present invention. Like features between the design known in the art and this inventive embodiment 20 are labelled with like reference numerals, incremented by 100.

**Figure 3A** shows an embodiment according to the present invention with a piston 220 in an open position. A setting screw 250 is provided, shown in a position where the distal end 252 is not extending any distance out from the end cap face 244. However, as can be seen, the proximal end 236 of the plunger 230 is not abutting the end cap face 244 as would be the case with the known reducer 10. Instead, the end cap 240 includes a protruding seat 246 extending from the end cap face 244 against which the proximal end 236 of the plunger 230 contacts. The end cap face 244 is the main surface of the end cap 240 which faces into the internal cavity 211 of the body 210. The end cap face 244 is substantially planar and the protruding seat 246 extends in a direction substantially perpendicular to the plane of the end cap face 244.

The protruding seat 246 forms part of an effective length of the plunger 230 which is defined as a minimum length between the sealing point 234 and the end cap face 244. In other words, the protruding seat 246 sets a fixed minimum extension distance from which the proximal end 236 is separated from the end cap face 244.

As will be understood, if the setting screw 250 is adjusted to extend out from the end cap face 244 at least as far as the protruding seat 246 extends from the end cap face 244, then the distal end 252 of the setting screw 250 will contact the proximal end 236 of the plunger 230. Adjusting the setting screw 250 so the distal end 252 extends further than the protruding seat 246 extends will cause effective length of the plunger 230 to increase. In other words, the setting screw 250 can control the extension distance between the proximal end 236 and the end cap face 244 above a minimum distance set by the protruding seat 246. In the same regard, the protruding seat 246 forms part of the effective length of the plunger 230 and therefore (at least partly) defines a minimum of this effective length.

In this embodiment, the setting screw 250 is generally rotatable so as to vary the effective length above the minimum set by the protruding seat 246 by between around 0.73 mm and around 2.48 mm, with a nominal extension distance of around 1.60 mm. It will be understood that these measurements are provided as examples only and many other minimum, maximum, and nominal extension distances are applicable to and indeed suitable for the present invention. These measurements represent a balance between customisation of the open/closed position threshold and adjustment distance, while minimising the space taken up by the plunger and piston. It is often important for first stage pressure reducers to be as compact as possible to improve manoeuvrability for the user.

If the setting screw 250 is adjusted so that the distal end 252 does not extend as far as the protruding seat 246 (or is in a failure condition with the same effect), then (as shown in Figure 3A) the proximal end 236 contacts the protruding seat 246. In other words, the proximal end 236 is prevented from coming any closer to the end cap face 244 than the minimum permitted by the protruding seat 246.

**Figure 3B** shows the setting screw 250 in the same position as in Figure 3A, and similar to the state shown in Figure 2C of the known design. However, unlike Figure 2C, in Figure 3B the sealing point 234 is shown to be forming a seal against the sealing seat 228. This is because, although the distal end 252 is not in contact with the proximal end 236, the protruding seat 246 maintains an effective length of the plunger 230 which is greater than an effective length of the plunger bore 229 (the effective length of the plunger bore being defined as a minimum distance from the sealing seat 228 to the end cap face 244). Resultingly, the sealing point 234 is further from end cap face 244 than the sealing seat 228, and so the sealing point 234 and sealing seat 228 can make contact. In other words, the plunger 230 is pushed further into the piston plunger bore 229 than would otherwise be the case if the protruding seat 246 was not there, allowing the sealing point 234 to seal against the sealing seat 228.

As can be seen, the protruding seat 246 is annular in shape and encircles the threaded through-hole 242 of the end cap 240. The protruding seat 246 has an external diameter smaller than the internal diameter of the plunger bore 229, therefore allowing the protruding seat 246 to extend into the plunger bore 229 when the piston head 222 is in contact with (or closest to) the end cap face 244.

It will be understood that the effective length of the plunger 230 in relation to the effective length of the plunger bore 229 (i.e., the difference between the two) determines the position in which the piston 220 must move to for a seal to form between the sealing seat 228 and the sealing point 234. In turn, this position of the piston 220 determines the maximum pressure of the lower-pressure region before the gas in the lower-pressure region causes the piston 220 to move to the closed position.

In some embodiments, the effective length of the plunger 230 corresponds to a maximum pressure in the lower-pressure region of around 1.2 MPa before the piston 220 moves from the open position (Figure 3A) to the closed position (Figure 3B).

Typically, the equipment connected immediately downstream of the first stage pressure reducer 20 may include a pressure relief valve (not shown) which is configured to operate at around 1.3 MPa. Therefore, in these embodiments the piston 220 is able to move into the closed position (thereby preventing any further increase of pressure in the lower-pressure region) before the pressure relief valve is activated These embodiments reduce the likelihood of losing breathing gas to the surroundings while maintaining a safe breathing gas supply to the user.

As discussed above, the effective length of the plunger 230 is set (by selecting a plunger 230 length and a protruding seat 246 length) so as to ensure that, irrespective of the position of the setting screw 250, the sealing point 234 is always able to contact and seal against the sealing seat 228.

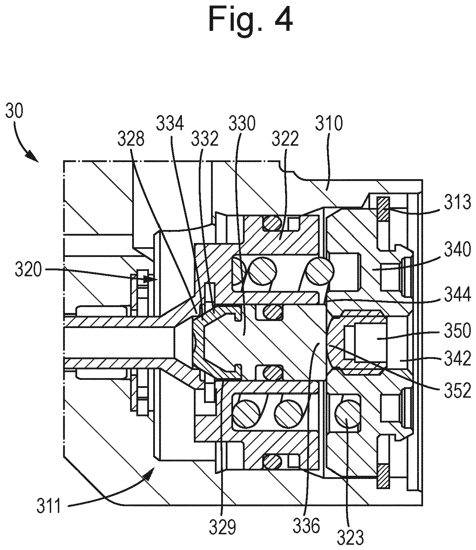

It will therefore be appreciated that other embodiments according to the present invention may not include a protruding seat 246. As shown in **Figure 4****,** instead, an appropriate effective length of the plunger 330 may be formed by increasing the plunger length (between the sealing point 334 and the proximal end 336 of the plunger 330) and/or by decreasing the plunger bore 329 effective length. The plunger 330 of Figure 4 is clearly shown to be extending out from the plunger bore 329. This difference in length allows the sealing at the sealing point 334 to occur when the piston 320 is maximally displaced towards the end cap 340.

In further embodiments, one or both effective lengths (plunger effective length and plunger bore effective length) may be set as described above while also providing a protruding seat on the end cap to further increase the effective length of the plunger (and decrease the effective length of the plunger bore relative to the plunger). In this way, it will be understood that the effective length of the plunger is formed partly of the protruding seat and partly of the length between the sealing point and the proximal end.

It will be appreciated that a setting screw is not required for the operation of a first stage pressure reducer according to the present invention. In such embodiments, the effective lengths of the plunger and piston are set so as to define the threshold at which the piston moves from the open to the closed position and vice versa. In some embodiments where a setting screw is not required for the operation of the first stage pressure reducer, a setting screw may nevertheless be provided for use during normal operation. The ability for the first stage pressure reducer to operate without a setting screw may then be exploited during a failure mode of the first stage pressure reducer, such as an inadvertent withdrawal or loss of the setting screw, to allow the first stage pressure reducer to continue to operate without the setting screw during the failure mode.

In all embodiments according to the present invention, it should be possible for the sealing seat 228, 328 to deform the sealing point 234, 334 of the distal sealing end 232, 332 by at least 0.1 mm, and ideally by at least 0.3 mm. Deformation of at least 0.1 mm ensures a tight seal is formed between the sealing point 234, 334 and the sealing seat 228, 328. Deformation of at least 0.3 mm also ensures a tight seal is formed and further means that such deformation is tolerant to a greater degree of mechanical wear on the sealing point 234, 334. Therefore, the distal sealing end 232, 332 does not need to be replaced as frequently and lasts longer.

This level of deformation is required for a suitably secure seal to form. To enable such deformation, the distal sealing end 232, 332 is generally formed of a material such as nylon or another polymer. In some embodiments, the sealing seat 228, 328 is convex in shape which causes the force imparted by the sealing seat 228, 328 onto the sealing point 234, 334 to be more highly localized (i.e., a high pressure), thereby forming a stronger seal than if the sealing seat 228, 328 had a higher contact area. The distal sealing end 232, 332 of the plunger 230, 330 may be user removable and replaceable.

Based on the abovementioned minimum deformation distances, it follows that the minimum difference between effective length of the plunger 230, 330 and the effective length of the plunger bore 229, 329 must be greater than 0.1 mm and ideally greater than 0.3 mm. In some embodiments, the difference is greater than 0.5 mm, 0.7 mm, or 1 mm. Measurements of the effective length of the plunger 230, 330 from the sealing point 234, 334 to the end cap face 244, 344 are always considered to be based on the undeformed position of the sealing point 234, 334.

In some embodiments, the end cap 240, 340 is removable from the body 210, 310, allowing a user to install a different end cap 240, 340. In some embodiments, a replacement end cap 240 with a protruding seat 246 of a different extension distance could be installed, which would result in a different effective length of the plunger 230. The end cap 240, 340 may be retained in the body 210, 310 by a circlip 213, 313.

References to minimum distance throughout this specification refer to distances along a line drawn between two parallel planes, the line being perpendicular to the planes. For instance, the effective length of the plunger (defined as the length between the sealing point 234 on the plunger 230 and the end cap face 244) is the length of a straight line extending perpendicular from a plane defined at the sealing point 234 to a parallel plane defined at the end cap face 244.

It will be appreciated by those skilled in the art that although the invention has been described by way of example, with reference to one or more exemplary embodiments of a first stage pressure reducer, it is not limited to the disclosed examples and that alternative examples could be constructed without departing from the scope of the invention as defined by the appended claims.

## Claims

1. A first stage pressure reducer (20, 30) for a breathing apparatus comprising:
a body (210, 310) comprising an internal cavity (211, 311) and an end cap (240, 340) for closing an opening of the internal cavity (211, 311); and
a piston (220, 320) slidably arranged within the internal cavity (211, 311), the piston (220, 320) comprising a piston head (222, 322), the piston head (222, 322) comprising a bore (229, 329), the bore (229, 329) being configured to receive a plunger (230, 330), the plunger (230, 330) and piston (220, 320) being slidably moveable relative to each other, and the plunger (230, 330) having a sealing point (234, 334) configured to selectively seal against a sealing seat (228, 328) in the bore (229, 329) of the piston head (222, 322) when the plunger (230, 330) is received a sufficient distance into the bore (229, 329),
wherein, when a proximal end (236, 336) of the plunger (230, 330) contacts the end cap (240, 340), an effective length of the plunger (230, 330) is greater than an effective length of the bore (229, 329), such that the sealing point (234, 334) and the sealing seat (228, 328) are in sealing contact when the piston (220, 320) is maximally displaced towards the end cap (240, 340).

2. A first stage pressure reducer (20) according to claim 1, wherein the end cap (240) comprises a protruding seat (246) extending out from the end cap (240), the proximal end (236) of the plunger (230) being configured to contact the protruding seat (246) such that part of the effective length of the plunger (230) is formed by the protruding seat (246).

3. A first stage pressure reducer (20) according to claim 2, wherein the end cap (240) comprises an adjustment element (250) configured to vary the effective length of the plunger (230).

4. A first stage pressure reducer (20) according to claim 3, wherein the adjustment element is a setting screw (250) disposed within a threaded through-hole (242) of the end cap (240), a distal end (252) of the setting screw (250) being configured to contact the proximal end (236) of the plunger (230), and wherein rotation of the setting screw (250) varies the effective length of the plunger (230).

5. A first stage pressure reducer (20) according to claim 4, wherein the protruding seat (246) is a raised portion of the end cap (240) extending out from the end cap face (244) and wherein the distal end (252) of the setting screw (250) contacts the proximal end (236) of the plunger (230) when the setting screw (250) is adjusted so that the distal end (252) extends past the protruding seat (246).

6. A first stage pressure reducer (20) according to claim 1, wherein the protruding seat (246) is a raised portion of the end cap (240) extending out from the end cap face (244).

7. A first stage pressure reducer (20, 30) according to either of claims 4 or 5, wherein the protruding seat (246) is an annular protrusion which encircles the through-hole of the setting screw (250).

8. A first stage pressure reducer (20, 30) according to any one of the preceding claims, wherein a length of the plunger (230, 330) between the sealing point (234, 334) and the proximal end (236, 336) is greater than the effective length of the bore (229, 329).

9. A first stage pressure reducer (20, 30) according to any one of the preceding claims, wherein the effective length of the plunger (230, 330) is at least 0.1 mm greater than the effective length of the bore (229, 329), and optionally at least 0.3 mm greater than the effective length of the bore (229, 329).

10. A first stage pressure reducer (20, 30) according to any of the preceding claims, wherein the sealing point (234, 334) of the plunger (230, 330) is formed of a polymer, optionally nylon.

11. A first stage pressure reducer (20, 30) according to any one of the preceding claims, wherein the sealing point (234, 334) of the plunger (230, 330) is part of a distal sealing end (232, 332) of the plunger (230, 330), the distal sealing end (232, 332) being replaceable.

12. A first stage pressure reducer (20, 30) according to any of the preceding claims, wherein the sealing seat (228, 328) is a convex point, optionally an acutely convex point.

13. A first stage pressure reducer (20, 30) according to any of the preceding claims, wherein the end cap (240, 340) is removably installable into the opening of the body (210, 310), optionally wherein the end cap (240, 340) is retained in the body (210, 310) by a circlip (213, 313).

14. The first stage pressure reducer (20, 30) according to any one of the preceding claims, wherein:
the internal cavity (211, 311) of the body (210, 310) has a higher-pressure region configured to receive higher-pressure gas from a gas source, a lower-pressure region configured to receive lower-pressure gas from the higher-pressure region, and a piston bore, the piston bore connecting the higher-pressure region and the lower-pressure region;
the piston (220, 320) being configured to move reciprocally inside the piston bore between an open position and a closed position, the open position corresponding to a state whereby gas is permitted to flow from the higher-pressure region to the lower-pressure region via an internal bore of the piston (220, 320), and the closed position corresponding to a state whereby gas is inhibited from flowing from the higher-pressure region to the lower-pressure region via the internal bore;
the piston (220, 320) being configured to move from the open position to the closed position when a pressure differential between the higher-pressure region and the lower-pressure region falls below a lower threshold; and
the piston (220, 320) being configured to move from the closed position to the open position when the pressure differential between the higher-pressure region and the lower-pressure region rises above an upper threshold.

15. A self-contained breathing apparatus comprising a first stage pressure reducer (20, 30) according to any one of the preceding claims.
